# EUROPEAN PATENT SPECIFICATION

(11) **EP 1 599 979 B1**
(45) Date of publication and mention of the grant of the patent: **14.03.2007**
(21) Application number: 04705968.8
(22) Date of filing: 28.01.2004
(51) Int. Cl.: H04L 12/58, H04Q 7/22

(54) **MESSAGE MANAGEMENT**
NACHRICHTENVERWALTUNG
GESTION DE MESSAGES

(30) Priority: 27.02.2003 GB 0304604
(43) Date of publication of application: 30.11.2005
(73) Proprietor: TELEFONAKTIEBOLAGET LM ERICSSON (publ), 164 83 Stockholm (SE)
(72) Inventor: WILLEHADSON, Stefan, S-757 57 Uppsala (SE); DANNE, Anders, S-164 41 Kista (SE)
(74) Representative: Stenborg, Anders Vilhelm
(86) International application number: PCT/SE2004/000108
(87) International publication number: WO 2004/093401

(56) References cited:
- WO-A-02/45344
- WO-A-03/005737
- US-A- 6 134 432
- US-A1- 2001 051 990

## Description

### TECHNICAL FIELD

The present invention generally refers to communication in a communication system, and in particular to efficient managing of messages in such a system.

### BACKGROUND

Today, there is an increasing trend to communicate through transmission of messages between different users or clients in a communication system. For example, in mobile communication systems, SMS (short message service) messages are widely used to communicate between different mobile units or mobile telephones. In addition, the emerging MMS (multimedia message service) messaging is predicted to become at least as a great success as SMS messaging.

Another form of messaging, IM (instant messaging) has become very popular for use in communication between selected computer users. In a typical IM application, a user transmits an IM message to one or more friends or buddies, which are found in his/her address book and are logged into the IM system. This IM system requests presence information from the user's buddies and then presents this information to the user, indicating which buddies that are available at any instance. Current solutions for managing IM typically require that a dedicated software program is downloaded and installed on the user's computer. Furthermore, the computer is required to use a well-defined protocol in order to communicate with the server offering the IM services. Examples of available IM services include IRC (Internet relay chat), ICQ, AIM (American online instant messaging), IMPS (instant message and presence service) and Wireless Village.

The IM services and other enhanced-messaging services are now beginning to emerge also in mobile communication systems and provide enhanced-service communication, e.g. IM communication, between mobile units or a mobile unit and a computer. In such a system, a mobile unit is connected to the communication network through a data channel. The enhanced-service messages are then transmitted over that data channel, similarly to any data traversing data channels between the mobile unit and the communications network.

However, problems arise when implementing such enhanced-service messaging, including instant messaging, in mobile communication systems. Most often there are no efficient standardized solution for a mobile unit, in particular for a legacy mobile unit with limited or no enhanced-service capability, to respond to a received enhanced-service message. A typical example is when a computer or enhanced-service capable mobile unit transmits an IM message or a presence request message to a legacy mobile unit. In order to respond to such a message, the user of that mobile unit manually has to parse the received message, identify the sender and then manually input the sender's telephone number or other address information of the sender.

Naturally, this is not an optimal solution, but actually a retrogression compared to SMS messaging, where the user typically simply responds to a received SMS message by choosing or pressing reply on the (legacy) mobile unit. Thus, there is a need for a satisfactory solution providing response of enhanced-service messages, such as IM messages, in communication systems.

In the patent application US 2002/0165000 A1, a wireless communications device logs on to an instant messaging service through a proxy server. Notification of an incoming instant message is provided to the wireless communications device by converting at least a part of the instant message to SMS format or by transmitting a notice in SMS format that a message has been received.

In the patent application US 2002/0087634 A1, a method and system for enabling messaging systems to use alternative message delivery mechanisms are disclosed. In a communication system, users register one or more alternative message delivery mechanisms through which they are available as an alternative to an instant messaging system. When an IM message is transmitted to a user that presently is not logged on, the system will select a suitable alternative delivery mechanism and deliver the message.

The international patent application WO 03/053083 discloses instant messaging between a SIP (Session Initiation Protocol) user and a mobile telephone user. The SIP user is connected to a first communications network and transmits an IM message intended to the mobile telephone of a mobile communications network. A gateway connected to the two networks receives the IM message and assigns a temporary number or address to identify the SIP user. This temporary number is stored in the gateway together with the SIP address of the SIP user and phone number of the mobile user. The temporary number is in a standard associated with the mobile telephone. The gateway further converts the IM message into a SMS message that is sent to the mobile user. Due to the temporary number the mobile user can reply to the incoming message simply by pressing a reply button. The reply SMS message is forwarded to the gateway. The gateway extracts the temporary number and the mobile user's phone number from the reply message and retrieves the address information of the SIP user based on these two numbers. The SMS reply message is then converted into IM format and transmitted to the SIP user.

US Patent No. 6,134,432 describes a gateway used in a wireless communications system for enabling messaging between different users. A first user sends an electronic message, e.g. e-mail, to a mobile telephone user. The destination address (phone number) is of a first format, whereas the reply address (e-mail address) is of a second different format. A gateway receives the electronic message and creates a temporary address in the first format and associates the temporary address with the reply address. A modified electronic message (SMS) is then transmitted to the mobile user. This modified electronic message includes as a reply address the temporary address. The gateway subsequently receives a reply electronic message from the mobile user. This reply electronic message is then forwarded to the first user by means of the association between the temporary address, received in the reply message, and the reply address, stored in the gateway.

Neither the international patent application WO 03/053083 nor US Patent No. 6,134,432 disclose an efficient way of generating and, in particular, managing the temporary address. In these two documents, the temporary address is of a format supported by the mobile user but is otherwise selected arbitrary. This means that the gateway has to subscribe to very many such different random temporary addresses in order to be able to use them for messaging purposes. This of course leads to increased administration efforts in order to implement the gateway described in the documents. Furthermore, the above-identified documents do not suggest or disclose usage of several gateways in cases with extensive messaging in the communications system.

The document US 2001/0051990 discloses a mail transfer device for relaying an e-mail transmitted from a transmitting terminal to a reception terminal. When the transfer device receives the e-mail it adds a message ID to the e-mail and converts the transmitter's e-mail address into an e-mail address allocated to the transfer device. The transmitter's address and the message ID are then stored in a memory, while the e-mail with the message ID included in the body of the e-mail and the address of the transfer device as source address is transmitted to the receiving terminal. In this way, the address of transmitter can be kept secret from the receiver.

### SUMMARY

It is a general object of the present invention to provide efficient message management in communication systems.

It is another object of the invention to provide efficient management of message responses in communication systems.

Yet another object of the invention is to enable enhanced-service messaging with non-enhanced-service capable clients in communication systems.

A further object of the invention is to provide dynamic management of responses to previously transmitted request messages in communication systems.

It is a particular object of the present invention to provide efficient generation and management of temporary address information for enabling the enhanced-service messaging with non-enhanced-service capable clients in communication systems.

These and other objects are met by the invention as defined by the accompanying patent claims.

Briefly, the present invention involves management of messages in a communication system. In particular, the invention enables enhanced-messaging service, such as instant messaging and presence services, in existing communication systems with non-enhanced-service capable or legacy clients. Furthermore, the invention enables response to a request message received by a user also in such applications where the format of the sender's address provided in the request message is illegible or non-replyable by the user's equipment.

Generally, in such a communication system, a first network unit, e.g. a mobile unit or computer, transmits a request message to a second network unit, e.g. a non-enhanced-service capable mobile unit or computer. The request message is received by a messaging center, where transaction information or identifier associated with the message is generated. This transaction information is stored in a messaging database associatively with an identifier, e.g. name, MSISDN (mobile subscriber integrated services digital network), IMSI (international mobile subscriber identity), IP (Internet protocol) address or email address, of the first network unit or its user. The database may also comprise additional information associated with the request message, e.g. message format or type, or the second network unit, e.g. an identifier of the second network unit or its user, and/or a time-to-live value for the stored information in the database. The information is preferably stored as a data entry in the database.

The messaging center then generates temporary address information based on the stored transaction information and an identifier or target number of the messaging center. The format of the temporary address is preferably legible and replyable by the second user equipment, i.e. the second user equipment supports this temporary address format. In addition, it should be possible to later extract the transaction information from the temporary address. In a mobile communication system, preferred temporary address information comprises the identifier of the messaging center as a first portion or prefix, e.g. 8888, and the transaction information as a second portion or suffix, e.g. 4711, giving the temporary address 88884711. In such a case, the messaging center could subscribe to mobile telephone numbers beginning with 8888, such that messages destined to 8888X₁X₂X₃X₄, where Xi, i = 1...4, is any figure from 0 to 9, is transmitted to the messaging center.

This way of generating temporary addresses by employing an identifier of the IMPS center 100 as a first portion and then the transaction information as second following portion enables efficient management of temporary addresses and reduces the required administrational efforts. Thus, the messaging center of the invention simply subscribes to the phone numbers beginning with its identifier. This should be compared to the known solutions, where a prior art gateway has to subscribe to more or less random numbers having no common organization besides the total number of digits of the temporary numbers.

A second request message is then provided or generated by the messaging center. The format of this second request message is preferably supported by the second network unit. In addition, the second request message preferably comprises at least a portion of the first request message, such as a portion or major portion of the payload of the first request message. The messaging center may also provide additional information in the second request message. This second request message is then associated with the temporary address information so that, when transmitted to the second network unit, the message is interpreted by the second network unit as originating from the messaging center.

Due to the format of the temporary address, the user of the second network unit may subsequently reply or respond to the second message simply by selecting or pressing reply on his/her network unit. The response message is then transmitted to the messaging center, where the temporary address information is identified and extracted from the response message. Furthermore, the messaging center extracts the transaction information from the temporary address and uses this information to retrieve the identifier of the first network unit stored in the database. In addition, the messaging center provides or generates a second response message intended to the first network unit. This second response message preferably comprises at least a portion of the original response message transmitted from the second network unit. The format of this second message is preferably the same as the corresponding message format of the first message. The second response message is then transmitted to the first network unit by means of the retrieved identifier of the first network unit. Upon reception, the user of the first network unit interprets the second response message as originating from the second network unit.

For an implementation in a mobile communication system, the request message transmitted from the first network unit and the second response message from the messaging center are preferably IM messages, such as a chat message, IRC (Internet relay chat) message, ICQ message, AIM (American online instant messaging) message, IMPS (instant message and presence service) message and Wireless Village message, presence-information request and presence information message, respectively, advertising offer and reply messages, respectively or an email. In addition to the above identified message formats, the second request message from the messaging center to the second network unit and its response message may be SMS (short message service) or MMS (multimedia message service) messages.

The invention offers the following advantages:
- Provides the capability of a user to respond to a request message from another user even though his/her network unit does not support the address standard of the request message and/or the format of the request message;
- Enables use of legacy mobile units also for emerging or new messaging services, including instant messaging services and presence services;
- Allows network operators to deploy new messaging services in existing network systems without the need to upgrade the subscribers' network units;
- Enables a user to handle presence privacy by a simple acknowledge upon a presence request from another user;
- Provides possibility to communicate anonymously since no originating address information, e.g. MSISDN, is exposed to other users;
- Provides efficient generation and management of temporary address information;
- Reduces any administrational efforts required for organizing subscription to temporary addresses for the messaging center; and
- Enables usage of several messaging centers, including a hierarchical structure of such centers, in situations with extensive messaging.

Other advantages offered by the present invention will be appreciated upon reading of the below description of the embodiments of the invention.

### SHORT DESCRIPTION OF THE DRAWINGS

The invention together with further objects and advantages thereof, may best be understood by making reference to the following description taken together with the accompanying drawings, in which:
Fig. 1 is an overview of a communication system employing the present invention;
Fig. 2 is a flow diagram of the general steps of the message management method of the present invention;
Fig. 3 is a flow diagram of additional steps of the message management method of the present invention;
Fig. 4 is an overview of a mobile communication system employing the present invention;
Fig. 5 is a schematic illustration of a messaging database according to an embodiment of the present invention;
Fig. 6 is a schematic block diagram of a messaging center according to the present invention; and
Fig. 7 an overview of a mobile communication system with a hierarchical implementation of messaging centers according to the present invention.

### DETAILED DESCRIPTION

Throughout the drawings, the same reference characters will be used for corresponding or similar elements.

The invention is directed to a method, center and system for enabling and providing efficient message management in a communication system, such as a mobile communication system. In particular, the invention enables efficient management of response messages in such systems. The invention is particular applicable when implementing new or enhanced messaging services and mechanisms in existing communication systems and enables implementation of such services without first upgrading the users' network units. For example, today there is no satisfactory solution for managing, and in particular, responding to instant messages or presence-information request messages in a mobile communication system, especially for legacy mobile units, station and telephones lacking the capability to efficiently handle and manage such message types and formats. In such instances, the communication system most often actually is able to deliver the message or at least a portion or notification thereof to the receiver. However, in order to respond to such a message, the receiver has to manually parse through the message, identify the sender and then manually input address information, e.g. mobile telephone number or email address, of the sender. This may also be the case when the receiving equipment does not support the address format or standard of the sender, which is received together with the message. For example, a legacy mobile unit receives an instant message, where the sender's address is hs.qwex@imps.org. If the only messaging services supported by the legacy mobile unit is SMS (short message service) messaging, the user of the mobile unit can not simply reply to the message. Instead, the user first has to identify a corresponding mobile telephone number of the sender based on the address information provided in the message and then manually input the mobile telephone number in order to transmit a response message.

However, the present invention enables a receiver of a request message to automatically respond to that message, preferably simply by selecting or pressing reply on his/her mobile unit or computer, even if his/her equipment actually does not support the address format of the originating sender or the format of the request message. The invention also dynamically manages responses from the receiver by enabling conversion between different message formats or types, where a first message format is supported by a sender of the request message but not by the receiver, whereas this sender is able to support a second message format.

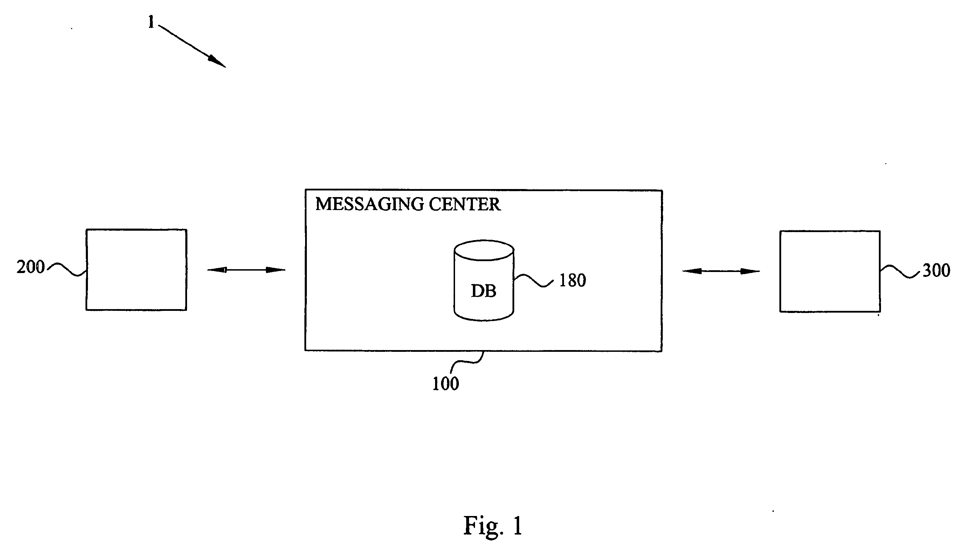

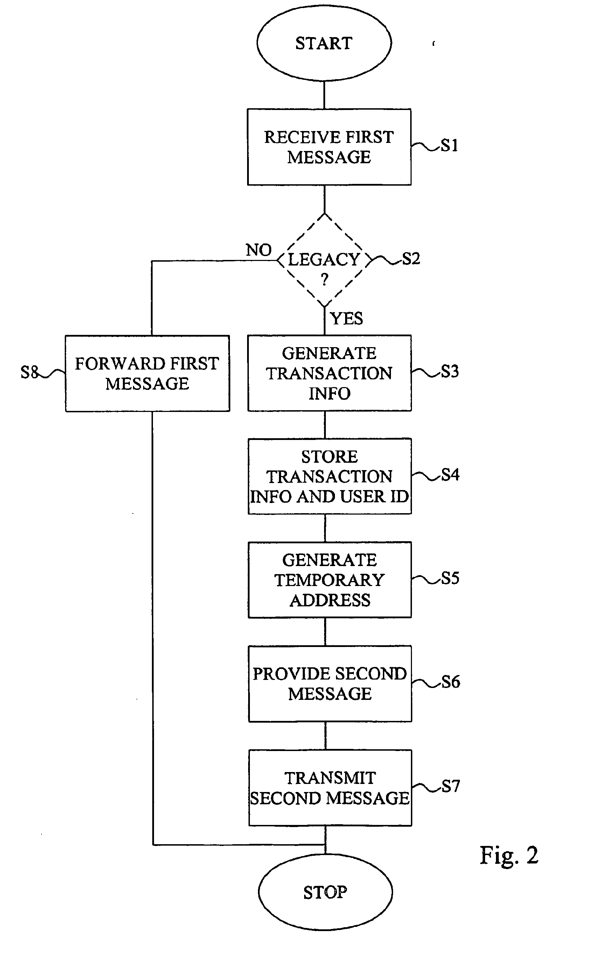

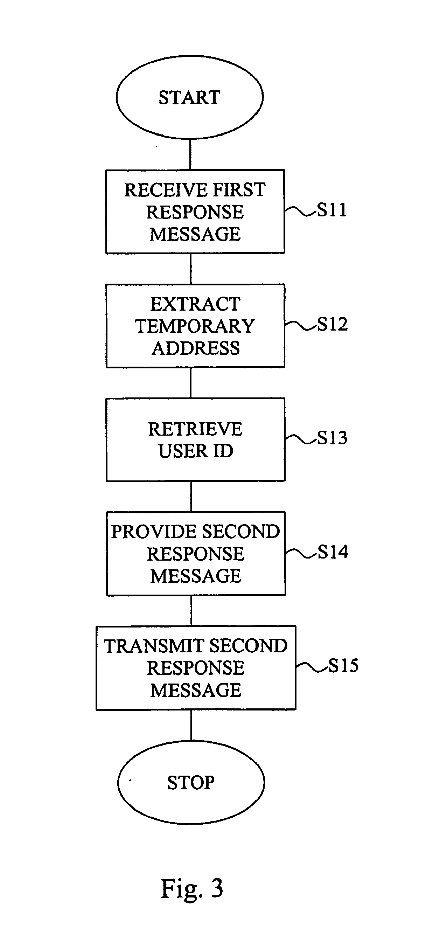

In order to gain a basic and intuitive understanding of the invention, we will begin by describing a communication system employing the invention with reference to Figs. 1 to 3.

In a communication system 1, a first network unit 200 transmits a request message to a second network unit 300 and subsequently expects to receive a response message from that second network unit 300. The network units 200 and 300 may be computers, mobile units, etc. connected to a network provided by the communication system 1, which is discussed in more detail below. The sender unit 200 generates and transmits the request message intended to the receiver unit 300. A messaging center 100 is provided in the communication system 1 for receiving (S1) the request message transmitted from the sender unit 200. Upon reception of the request message, the messaging center 100 may optionally investigate (S2) if the receiver unit 300 supports the message type or format of the request message. If it is concluded that the receiving network unit 300 supports and can manage the format of the request message, the messaging center 100 forwards (S8) the request message and the method is ended. However, if the receiver unit 300 does not support the request-message format, i.e. is either a legacy network unit or is operating in an operation mode that does not support the request message, the messaging center 100 generates (S3) transaction or session information associated with the message. Furthermore, the messaging center 100 stores (S4) the transaction information associatively with an identifier of the sender unit 200 in an associated database 180. The identifier may be e.g. a name or nick name associated with the user of the sender unit 200, address information of the sender 200, such as information of a subscription of the user with a network operator providing the communication network, including MSISDN (mobile subscriber integrated services digital network) and IMSI (international mobile subscriber identity), or an IP (Internet protocol) address or email address. Actually any identifier allowing the messaging center 100 to identify the sender 200 may be used.

The messaging center 100 stores the transaction information associatively with the identifier in the database 180. The expression "associatively storing" is referred to, in the present description, storing the transaction information and the identifier in such a way that it is possible to later retrieve the identifier based on knowledge of the transaction information. A typical example of associatively storage is when the transaction information and the identifier are stored together as a data entry in the database 180.

Furthermore, the transaction information and the identifier may be stored at different locations within the database 180 or in two different databases, as long as there is a connection, such as a pointer, between the different storage locations. This connection (pointer) enables the messaging center 100 to retrieve the identifier from the database 180 based on the transaction information.

The messaging center 100 may also store additional information associated with the message, the sender 200 and/or the receiver 300, in addition to the transaction information and the identifier, which is discussed further below.

The messaging center 100 then generates (S5) a temporary address based on the generated and stored transaction information and an identifier of the messaging center 100. The temporary address is generated in such a way that it is possible to extract the transaction information therefrom. Furthermore, the format of the temporary address is preferably supported by the receiver unit 300. In addition, since the temporary address is generated based on an identifier of the messaging center 100, a message destined to the temporary address will be transmitted to and received by the messaging center 100.

A second request message is then provided (S6) by the messaging center 100. The format of this second request message is preferably supported by the receiver's network unit 300. This second request message preferably comprises at least a portion of the request message transmitted from the sender unit 200, such as at least a portion of the payload of the original request message. The second request message may comprise the whole or a major portion of the payload of the original request message. The second request message may also include additional information provided by the messaging center 100, such as an identifier of the sender 200 and/or the meaning of the second request message, e.g. IM message from Cindy.

The messaging center 100 then transmits (S7) the second request message to the receiver's network unit 300, which perceives or interprets the temporary address as the address of the sender of the second request message. In other words, the second request message transmitted from the messaging center 100 is associated with the temporary address in such a way that the temporary address is displayed as the address of the sender for the receiving network unit 300. However, since the second request message comprises at least a portion of the original request message, and preferably also some explanatory information (IM message from Cindy), the user of the network unit 300 reads the message as originating from the user of the sending network unit 200. Due to the careful choice of the temporary address, the user of the network unit 300 may compose and then transmit a response message by simply selecting or pushing reply, or similar, on his/her network unit 300.

The temporary address will be the receiving address of the response message, whereby the messaging center 100 subsequently may receive (S11) the response message. Upon reception, the messaging center 100 extracts (S12) and identifies the temporary address from the response message. From the temporary address the transaction information is extracted. The transaction information is then used to retrieve (S13) the stored identifier of the network unit 200 sending the original request message.

The messaging center 100 then provides (S14) or generates a second response message. The second response message preferably comprises at least a portion of the response message transmitted from the network unit 300, such as at least a portion of the payload of the original response message. The second response message may comprise the whole or a major portion of the payload of the original response message. The second response message may also include additional information provided by the messaging center 100, such as an identifier of the network unit 300 and/or the meaning of the second response message (IM response message from Anne). Based on the retrieved identifier, the messaging center 100 then transmits (S15) the second response message to the network unit 200. Once the second response message is transmitted, the messaging center 100 may remove the corresponding transaction information and associated identifier from the database 180 or indicate the entry comprising the transaction information and identifier as empty or rewritable.

The first network unit 200 may be any unit capable of performing communication in the communication network, such as a mobile unit, e.g. a mobile telephone, personal digital assistant or communicator. The mobile unit is preferably an enhanced-service capable mobile unit, such as a mobile unit supporting IM and/or presence services. Furthermore, the first network unit 200 could be a computer, e.g. a PC (personal computer), or a server, e.g. a server managing a chat room. The first network unit 200 also includes a group of users or clients having user equipment for enabling communication with the network. Also a network unit of a service center providing enhanced-services or other services, e.g. advertising or special offer services, is interpreted as a first network unit 200 according to the invention.

Similarly, the second network unit 300 may be any unit capable of communicating within the network. A typical example of a second network unit 300 according to an invention is a computer or mobile unit or station, e.g. mobile telephone, not supporting an enhanced service or is operating in an operation mode not supporting the enhanced service. Such a mobile unit is generally referred to as a legacy mobile unit in the art. The mobile unit is not able to efficiently support or manage address information associated and provided in enhanced-service messages, including but not limited to IM (instant messages) messages, such as chat messages, IRC (Internet relay chat), ICQ, AIM (American online instant messaging), IMPS (instant message and presence service) and Wireless Village messages. In order to support the enhanced-service messaging, the mobile unit typically requires additional software or hardware, or a subscription to the enhanced service.

A typical scenario, where the invention is particularly advantageous, is when a computer or IM-capable mobile unit transmits an IM message intended to a non-IM-capable network unit, e.g. a legacy mobile unit. Furthermore, a member of a chat group or a server managing a chat room could transmit a chat invitation message to a network unit, inviting him/her to join the chat group or room, respectively. The invention is also applicable when a user or IM server transmits a presence-information request message to a legacy mobile unit. An advertising server or program of a company may transmit an advertising or special offer message to a network unit, desiring a response from the network unit to the offer presented in the message.

In the following, the invention will be described in more detail with reference to a particular embodiment, an IM-capable mobile unit transmitting an IM message to a non-IM-capable mobile unit in a mobile communication system. However, as the skilled in the art understands, the invention is not limited to this particular embodiment, but may comprise any other network units and messages described above.

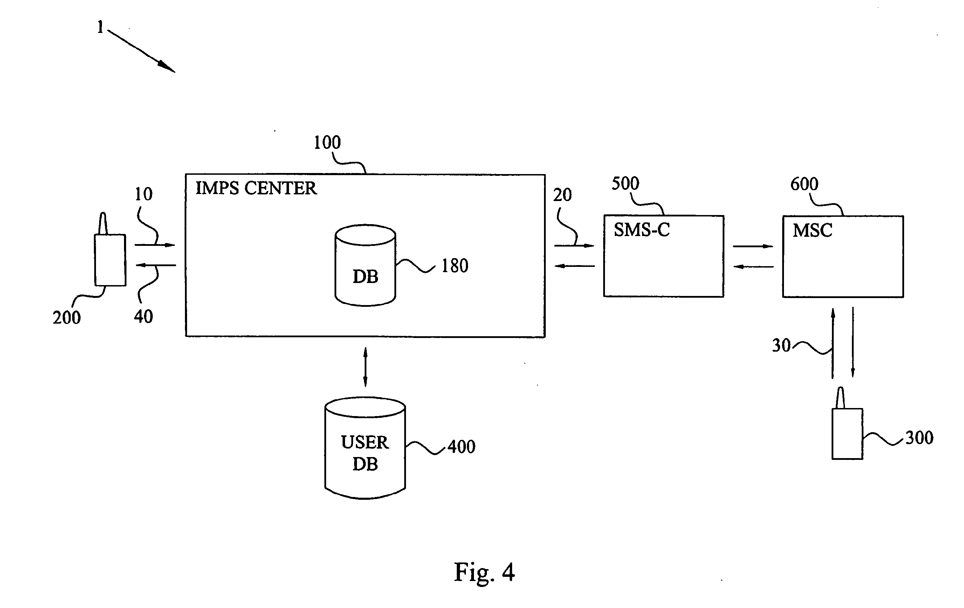

Fig. 4 illustrates a mobile communication system 1, in which an IM-capable mobile unit 200 wants to communicate with a non-IM-capable mobile unit 300 through IM messaging. The IM-capable mobile unit 200 transmits an IM-message 10 intended to the non-IM-capable mobile unit 300. An IMPS (instant messaging and presence service) center or server 100 receives the IM message and identifies the intended receiver of the message. The IM message typically comprises an identifier of receiving mobile unit 300, such as name, nickname, subscription information or similar. Based on the identifier the IMPS center 100 obtains address information, such as mobile telephone number, MSISDN, IMSI of the receiving mobile unit 300, from a user database 400. This user database 400 comprises address information of users, such as users associated, e.g. through a subscription, with an IM system or server, and their corresponding identifiers. The database 400 may be implemented in the IMPS center 100 or may be remotely implemented and in connection with the IMPS center 100. If the address information of the mobile unit 300 is provided in the message, no retrieval of data from the user database 400 is required. The IMPS center 100 may also use the identifier or the address information to obtain operation mode information of the receiving mobile unit 300. Such operation mode information may be used by the IMPS center 100 to determine how the message is to be transmitted to the mobile unit 300. The information could state or indicate that the mobile unit 300 is IM-capable. In such a case, the IMPS center 100 transmits the IM message directly to the mobile unit 300. However, the information could instead indicate that the mobile unit 300 is non-IM-capable, or is IM-capable but not logged into the IM system and therefore not able to receive and transmit IM messages. The operation mode information could also indicate any other preferred messaging mechanism for use with an IM-capable mobile unit, when operating in a non-IM-capable mode, i.e. not logged in the IM system. The operation mode information may be obtained from a database implemented in the IMPS center 100 or remotely implemented. Alternatively, the operation mode information may be stored and obtained from the user database 400.

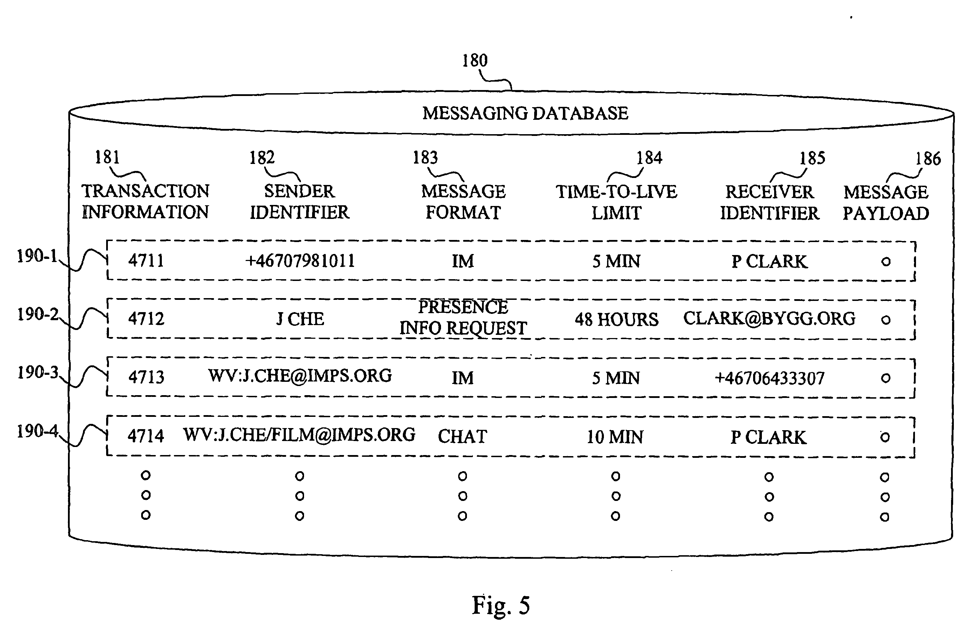

Once the IMPS center 100 has confirmed that the receiving mobile unit 300 is non-IM-capable or operating in a non-IM-capable mode, transaction information or identifier is generated. In addition, the IMPS center 100 identifies and retrieves a sender identifier of the IM-capable mobile unit 200 from the IM message, e.g. from the header of the message. The transaction information and the identifier are then stored associatively in a messaging database 180 in the IMPS center 100, or remotely provided but in connection with the IMPS center 100. The information and identifier are preferably stored as a data entry in the database 180, which is schematically illustrated in Fig. 5.

The data entry 190-1 includes the transaction information 181, which typically is a number or some other information identifying the data entry 190-1. The identifier 182 of the IM-capable mobile unit 200 (sender) may be a telephone number associated with the mobile unit 200, a name as in data entry 190-2, an IMPS identifier (data entries 190-3 and 190-4) etc. In addition to the transaction information and sender identifier, additional data may optionally be stored in the database 180. This additional data includes a format or type 183 of the received message, e.g. IM. This format information enables the IMPS center 100 to find out the actual meaning of the received message.

A predetermined time limit or time-to-live value 184 of the stored information (data entry) may also be provided. This value specifies within which time period a response message from the non-IM-capable mobile unit 300 is due. If the time limit expires before reception of the response message, the information in the data entry 190-1 is deleted, e.g. by removing all stored information or only the transaction information. If a response message is received after expire of the time limit, the IMPS center 100 simply ignores the response message. Alternatively, an error message is transmitted to the mobile unit 300, pointing out the failure to respond within due time. The time limit or time-to-live value is preferably determined by the IMPS center 100 based on the format or type of the message from the IM-capable mobile unit 200.

Furthermore, an identifier 185 associated with the receiver or the mobile unit 300 of the receiver may be stored in the database 180. The receiver identifier may be similar to the sender identifier discussed above, i.e. for example a name, nick name, address information, subscription information, MSISDN, IMSI, IP address, email address or any other form of information allowing the IMPS to identify the receiver 300. As was mentioned above, this receiver identifier is obtained from the IM message or from the user database 400 based on information provided in the IM message.

In addition, the actual request message (IM message), or a portion thereof, received by the IMPS center 100 may be stored in the database 180. In such a case, the header and/or payload of the request message can be found in the data entry 190-1.

Returning to Fig. 4, the IMPS center 100 then generates a temporary address, preferably in such a way that the non-IM-capable mobile unit 300 supports and easily can manage the address information. According to the present invention, the temporary address is based on the generated and stored transaction information and an identifier associated with the IMPS center 100. This identifier allows the mobile communication system 1 to deliver any messages transmitted to the temporary address to the IMPS center 100. In addition, the transaction information should be retrievable from the temporary address. A preferred temporary address for a mobile communication system according to the present invention is:
X1...XnY1...Ym,
where Xi, i = 1...n and Yj, j = 1...m, n, m independently are any positive integer number, are any figure from 0 to 9. The first portion, the prefix, X1...Xn, is the identifier of IMPS center 100 (for example 8888, with n=4). The second portion, the suffix, Y1...Ym, is the transaction information (for example 4711, with m=4). The temporary address will in this example then be 88884711. The IMPS center 100 could then subscribe to numbers beginning with, or having prefix, X1...Xn, e.g. beginning with 8888. Thus, messages having X1...XnY1...Ym, e.g. 8888Y1Y2Y3Y4 as receiving address will preferably be delivered to the IMPS center 100.

In another embodiment of the present invention, the temporary address also comprises other figures or information besides the identifier of the IMPS and the transaction information. Thus, a possible temporary address can then be X1...XnY1...YmZ1...Zp or X1...XnZ1...ZpY1...Ym, where X1...Xn is the identifier of IMPS center, Y1...Ym, is the transaction information and Zi, i = 1...p, p is any positive integer number, is any figure from 0 to 9. This additional portion, Z1...Zp, of the temporary address could be "dummy" figures used to obtain a temporary address in a standard or format supported by the non-IM-capable mobile unit. Thus, the dummy figures make sure that the temporary address contains the correct number of figures for a phone number in the case of a standard that is to be supported by a mobile unit.

In other embodiments the additional portion could comprise information associated with the message sender, message receiver, the IMPS and/or the original (request) message. For example, the additional portion of the temporary address could be used by the IMPS center to identify the format of the original message from the IM-capable mobile unit and intended to the non-IM-capable mobile unit. Thus, the IMPS center determines the format of the received message, as was discussed above. However, instead of storing this format information in the database, the IMPS center adds format information (Z₁...Zₚ) to the temporary address. In a typical example, Z=0 could mean IM message format, Z=1 represents e-mail format, etc. When the IMPS center subsequently receives a reply message from the non-IM-capable mobile unit and should generate a reply message therefrom in the format of the original request message, no database look-up is required to determine this format since it is already provided in the received temporary address.

The temporary address could also be preceded by an operator identifier or number associated with the network operator managing the communication network housing the IMPS center. In such a case, the temporary address could be Q1...QqX1...XnY1...Ym, where X1...Xn and Y1...Ym, are identified above and Qᵢ, i = 1...q, q is any positive integer number, is any figure from 0 to 9. Thus, Q1...Qq is the operator identifier. It is possible that a single operator have access to addresses (phone numbers) beginning with different operator identifiers. However, in a preferred embodiment of the invention, the identifier of the IMPS center constitutes or comprises the operator identifier. For example, it could be possible that the network operator has provided a dedicated operator identifier for use with his IMPS center. The IMPS center then could have access to possible all addresses preceded by this particular operator identifier, i.e. the identifier of the IMPS center is equal to this dedicated operator identifier. However, in other applications the IMPS center does not need to have access to all such addresses but only a selected portion thereof. The identifier of the IMPS then preferably comprises the dedicated operator identifier followed by one or several additional figures.

This way of generating temporary addresses by employing an identifier of the IMPS center as a first portion (prefix) and then the transaction information as a second following portion (suffix) enables efficient management of temporary addresses and reduces the required administrational efforts. Thus, the IMPS center of the invention simply subscribes to the phone numbers beginning with the prefix, possible preceded by an operator identifier. This should be compared to the known solutions, where a prior art gateway has to subscribe to more or less random numbers having no common organization besides the total number of digits of the temporary numbers.

Thereafter, the IMPS center 100 provides or generates a second request message, preferably in a message format or type that the non-IM-capable mobile unit 300 supports. In the following, the second request message will be exemplified as a SMS message, but could instead be a MMS (multimedia message service) message or any other message type that the mobile unit 300 supports, including the format of the original request message (IM message) from the first mobile unit 200. The IMPS center 100 may identify information of available and suitable messaging formats or types for the mobile unit 300 from the obtained operation mode information. As was mentioned in the foregoing, the SMS message preferably comprises at least a portion of the IM message, such as a portion of the payload of the IM message. Additional information may also be included in the SMS message by the IMPS center 100, for example prefixed with a short text describing the meaning of the SMS (IM from Cindy). Also the determined time limit may be included in the SMS indicating for the user when a response is due.

The IMPS center 100 transmits the SMS 20 to the mobile unit 300 through an SMS-C (SMS center) 500 and a MSC (mobile switching center) 600, which is well known to a person skilled in the art. The sender address of the SMS will be the temporary address (88884711) and the receiver address is the MSISDN of the mobile unit 300, which is obtained from the IM message or from the user database 400.

The user of the mobile unit 300 can now identify the meaning of the SMS, i.e. that the SMS originates from an IM message, who transmitted the IM message, i.e. Cindy, and preferably read the payload, or at least a portion thereof, of the IM message, since it is included in the SMS. The mobile unit 300 may respond by entering a normal SMS message 30 and transmit to the temporary address (88884711).

Upon reception of the response SMS, the IMPS center 100 extracts the temporary address, e.g. from the header of the SMS. The transaction information is then extracted from the temporary address and is used to identify associated data, including the identifier of the sender 200 of the IM message, in the messaging database 180. However, if the transaction information is not present in the database 180, e.g. due to expire of the time limit, the response SMS is ignored, or the IMPS center 100 transmits an error SMS message to the mobile unit 300.

The IMPS center 100 then provides or generates a second response message that is to be transmitted to the IM-capable mobile unit 200. This message may be in any format or type that the mobile unit 200 supports. However, if the format or type of the original request message (IM message) is stored in the database 180 or provided in the temporary address, the IMPS center 100 preferably uses this information when generating the second response message. Thus, the format of the second response message is preferably the same as the format as the original request message, i.e. IM format in the present example. The IM response message preferably comprises at least a portion of the SMS response message, such as a portion of the payload of the SMS response message. Additional information may also be included in the IM response message by the IMPS center 100, for example prefixed with a short text describing the meaning of the message (IM response from Anne).

The IMPS center 100 then transmits the IM response message 40 to the IM-capable mobile unit 200. The IM response message preferably includes the identifier of the non-IM-capable mobile unit 300, which is obtained from the SMS response message, from the messaging database 180 or the user database 400, allowing the IM-capable mobile unit 200 to interpret the IM response message as originating from the non-IM-capable mobile unit 300. Once the IM response message is transmitted to the mobile unit 200, the data entry including the transaction information in the database 180 may be deleted or identified as empty.

If the messaging center has access to a user database or includes such a user database, it is actually possible for two network units to anonymously communicate with each other by messages without revealing their associated addresses, e.g. MSISDN, for each other. The first network unit simply composes and transmits a request message with an identifier, e.g. name, nickname or some other identifier, of the second network unit as receiving address. The messaging center will then obtain, based on the identifier in the request message, the actual address information of the second network unit from the user database. Since, the second request message is transmitted from the messaging center with the temporary address information as sending address, the second network unit will not receive the actual address of the first network unit, but only an identifier associated with the first network unit or its user. Likewise, the second response message transmitted from the messaging center to the first network unit may include only an identifier and not the actual address of the second network unit.

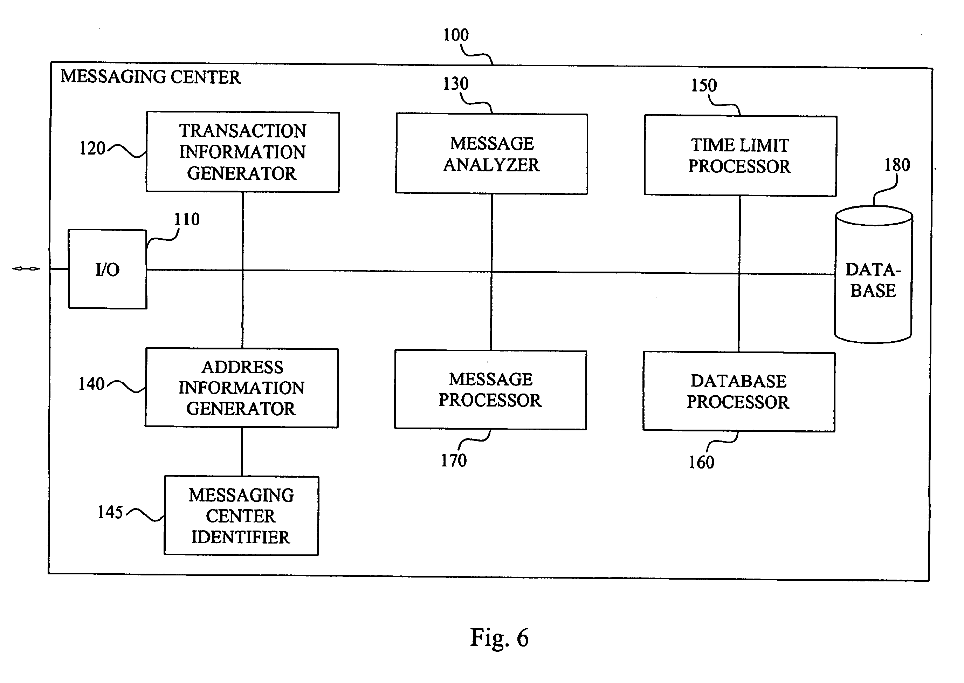

Fig. 6 schematically illustrates a block diagram of a messaging center 100 according to the present invention. The messaging center 100 comprises an input and output (I/O) unit 110 that provides means for communication with other units, e.g. remote databases or network units, in the communication system. The I/O unit 110 is in particular implemented for receiving incoming messages, including the IM message and SMS response message in Fig. 4, and transmitting messages, such as the SMS message and IM response message in Fig. 4. Also information from external databases, e.g. the user database 400 in Fig. 4, may be obtained by the messaging center 100 through the I/O unit 110.

A transaction information generator 120 is provided for generating transaction information upon reception of a request message from a network unit. The messaging center 100 also comprises a message analyzer 130 that is implemented for extracting an identifier of a sender of a request message and extracting the temporary address from a received response message. The analyzer 130 also preferably analyses messages and generates message format information of the format or type of received messages.

An address information generator 140 determines or generates temporary address information based on the transaction information from the transaction information generator 120 and an identifier associated with the messaging center 100. This identifier could be provided from a memory 145 in the center 100, which also could store a possible operator identifier. An optional time limit processor 150 determines a time-to-live value for a transaction information stored in a database 180 or for a data entry comprising the transaction information. The processor 150 is preferably configured for determining the time-to-live value based on message format information from the analyzer unit 130.

The temporary address from the address information generator 140 and the identifier of the sender form the analyzer 130 is provided to a database processor 160 that stores them associatively in the messaging database 180. The database processor 160 could be implemented for storing the information as a data entry in the database 180, or store the information distributively, as long as there is a connection between the relevant data, i.e. the transaction information and the identifier. The processor 160 can also store additional data in the database 180, such as the time-to-live value from the time limit processor 150, message format information and the identifier of the intended receiver of the request message provided by the message analyzer 130. The database processor 160 also retrieves information from the database 180 and deletes any entries when required, such as when a time-to-live value expires or a response message has been transmitted.

A message processor 170 is implemented for providing or generating the second request and response message, respectively. The message processor 170 may be configured for generating the second request message in response to operation mode information received from the I/O unit 110. In addition, the processor 170 preferably generates the second response message in response to message format information from the database 180 or analyzer unit 130.

The messaging center 100 and its including units 110 to 170 may be provided as software, hardware or a combination thereof. The units 110 to 170 and database 180 may all be implemented in the messaging center 100, as in Fig. 6. However, a distributed implementation is also possible, with the units 110 to 170 and database 180 provided in different network nodes of the communication system. The messaging center 100 may be implemented in a server in connection with an external network, such as Internet, and/or connected to a communication network provided by a network operator, e.g. a mobile network operator. Furthermore, the messaging center 100, or at least a major portion of the units 110 to 170 and database 180, could be implemented in the service network portion of the communication system, e.g. in a one or more service nodes or servers in the system.

Although the present invention generally has been described with use of one messaging center in a communication system, it is possible to employ several messaging centers in the system, especially if a high number of request messages transmitted to non-enhanced-service capable network units are expected. The different messaging center could then manage different request message transactions, such as a first messaging center managing chat messages and a second messaging center managing presence-information request messages, and/or manage different geographical areas. In such a case, each messaging center is then preferably associated with a unique identifier, e.g. 8888 for the first messaging center and 9999 for the second messaging center. Each such messaging center could then operate independently of other messaging centers, since each center is associated with a unique identifier and, thus, subscribes to a unique set of temporary addresses.

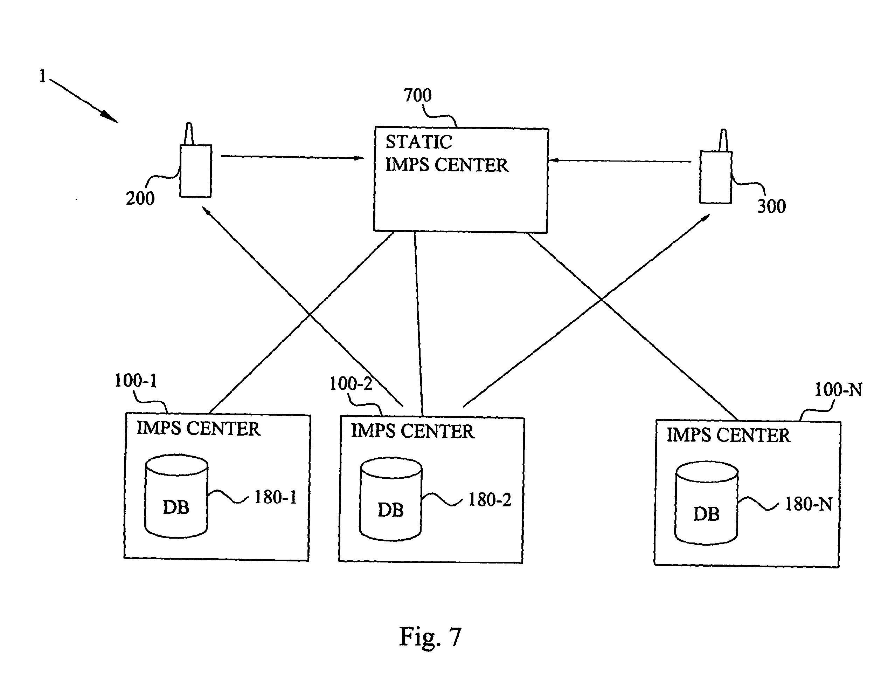

It is also possible to have one superior or controlling (static) messaging center managing several subordinated or secondary (dynamic) messaging centers. Fig. 7 illustrates a communications system 1 with one static messaging center 700 and several subordinated messaging centers 100-1 to 100-N. The static messaging center 700 may then receive the request (IM) message from e.g. an enhanced-service capable mobile unit 200 and intended to a legacy mobile unit 300. The static messaging center 700 provides the request message to one of its available subordinated messaging centers 100-2. The actual choice of messaging center 100-1 to 100-N can be based on e.g. accessible space in the associated messaging databases 180-1 to 180-N of the messaging centers 100-1 to 100-N, message format of the received messages, geographic location of the mobile units 200 and 300 or some other parameter associated with the messaging centers 100-1 to 100-N, mobile units 200 and 300 and/or the message. The selected messaging center 100-2 then generates transaction and temporary address information, and transmits a (SMS) request message to the legacy mobile unit 300. A possible reply SMS message is then received at the static messaging center 700, which forwards it to the messaging center 100-2 that generated the temporary address of the corresponding request SMS message.

A possible solution for such a hierarchical implementation in a mobile communication system is that the static messaging center subscribes to (all) telephone numbers beginning with e.g. 888. Each secondary messaging center then subscribe to all telephone numbers beginning with 888X, where X is a figure from 0 to 9. For example, the static messaging center 700 of Fig. 7 subscribes to phone numbers 888XXXXX, whereas the dynamic messaging centers 100-1 to 100-N subscribes to the following numbers 8880XXXX to 8889XXXX, respectively, for N equal to 10.

It is possible that all request and reply messages transmitted between the mobile units 200 and 300 and the messaging centers 100-1 to 100-N are directed through the static messaging center 700. However, a given subordinated messaging center 100-2 can, alternatively, perform direct message communication with the mobile units 200 and 300 as is schematically illustrated in the figure.

It will be understood a person skilled in the art that various modifications and changes may be made to the present invention without departure from the scope thereof, which is defined by the appended claims.

## Claims

1. A method of message management in a communication system (1), said method comprising the steps of:
- a messaging center (100) generating, in response to reception of a first message transmitted from a first network unit (200) and intended for a second network unit (300), transaction information associated with said first message;
- storing said transaction information associatively with an identifier associated with said first network unit (200);
- said messaging center (100) generating a temporary sender address that comprises an identifier associated with said messaging center (100) as a first portion and said transaction information as a second following portion; and
- said messaging center (100) transmitting a second message to said second network unit (300), said temporary sender address being assigned as sender address in said second message comprising at least a portion of said first message, wherein said temporary sender address is in an address format legible by said second network unit (300) and enables said second network unit (300) to respond to said first network unit (200) through said messaging center (100).

2. The method according to claim 1, **characterized in that** said identifier associated with said first network unit (200) represents an address of said first network unit (200) which is in an address format illegible by said second network unit (300).

3. The method according to claim 1 or 2, **characterized in that** said messaging center (100) has access to addresses beginning with said first portion or beginning with an identifier of an operator managing said communications system (1) followed by said first portion.

4. The method according to any of the claims 1 to 3, **characterized in that** said temporary sender address enables said second network unit (300) to transmit a first response message to said messaging center (100) and said transaction information is associatively stored with said identifier associated with said first network unit (200) in a messaging database (180) associated with said messaging center (100), said method comprising the further steps of:
- extracting said transaction information from said temporary sender address assigned as receiver address of said received first response message; and
- retrieving said identifier associated with said first network unit (200) from said messaging database (180) based on said transaction information,
wherein said retrieved identifier associated with said first network unit (200) enables said messaging center (100) to transmit a second response message to said first network unit (200), said second response message comprising at least a portion of said first response message.

5. The method according to claim 4, **characterized by**:
- removing, in response to transmitting said second response message, said stored transaction information from said messaging database (180).

6. The method according to claim 4 or 5, **characterized by**:
- said messaging center (100) obtaining an address associated with said first network unit (200) from a network-unit database (400) associated with said messaging center (100) based on said retrieved identifier associated with said first network unit (200),
wherein said address associated with said first network unit (200) enables said messaging center (100) to transmit said second response message.

7. The method according to any of the claims 1 to 6, **characterized in that** said storing step in turn comprises the step of:
- storing said transaction information and said identifier associated with said first network unit (200) associatively with message format information associated with said first message, said message format information allowing said messaging center (100) to identify a message format of said first message.

8. The method according to claim 4 and 7, **characterized by**:
- said messaging center (100) generating said second response message based on said obtained message format information, wherein the message format of said second response message is identical to said message format of said first message.

9. A messaging center (100) adapted for managing messaging in a communication system (1), said center (100) comprising:
- means (110) for receiving a first message transmitted from a first network unit (200) and intended for a second network unit (300);
- means (120) for generating, in response to reception of said first message, transaction information associated with said first message;
- means (160) for providing said transaction information and an identifier associated with said first network unit (200) for associative storage in a messaging database (180) associated with said messaging center (100);
- means (140) for generating a temporary sender address that comprises an identifier associated with said messaging center (100) as a first portion and said transaction information as a second following portion; and
- means (110) for transmitting a second message to said second network unit (300), said temporary sender address being assigned as sender address in said second message, wherein said temporary sender address is in an address format legible by said second network unit (300) and enables said second network unit (300) to respond to said first network unit (200) through said messaging center (100).

10. The messaging center according to claim 9, **characterized in that** said identifier associated with said first network unit (200) represents an address of said first network unit (200) which is in an address format illegible by said second network unit (300).

11. The messaging center according to claim 9 or 10, **characterized in that** said messaging center (100) has access to addresses beginning with said first portion or beginning with an identifier of an operator managing said communications system (1) followed by said first portion.

12. The messaging center according to any of the claims 9 to 11, **characterized in that** said receiving means (110) is configured for receiving a first response message, associated with said temporary sender address, transmitted from said second network unit (300), said messaging center (100) further comprising:
- means (130) for extracting said transaction information from said temporary sender address assigned as receiver address of said received first response message;
- means (160) for obtaining said identifier associated with said first network unit (200) from said message database (180) based on said transaction information,
wherein said obtained identifier associated with said first network unit (200) enables said transmitting means (110) to transmit a second response message to said first network unit (200), said second response message comprising at least a portion of said first response message.

13. The messaging center according to claim 12, **characterized by:**
- means (160) for removing, in response to said transmitting means (110) transmitting said second response message, said stored transaction information from said messaging database (180).

14. The messaging center according to claim 12 or 13, **characterized by**:
- means (110) for obtaining an address associated with said first network unit (200) from a network-unit database (400) associated with said messaging center (100) based on said obtained identifier associated with said first network unit (200),
wherein said address associated with said first network unit (200) enables said transmitting means (110) to transmit said second response message.

15. The messaging center according to any of the claims 9 to 14, **characterized in that** said providing means (160) is configured for providing said transaction information, said identifier associated with said first network unit (200) and message format information associated with said first message for associatively storage in said messaging database (180), said message format information enabling said messaging center (100) to identify a message format of said first message.

16. The messaging center according to claim 12 and 15, **characterized by**:
- means (170) for generating said second response message based on said obtained message format information, wherein the message format of said second response message is identical to said message format of said first message.

17. A communication system (1) adapted for managing messaging, said system (1) comprising at least one messaging center (100) according to any of the claims 9 to 14.

## Patentansprüche

1. Verfahren zur Nachrichtenverwaltung in einem Kommunikationssystem (1), wobei das Verfahren die Schritte umfasst:
- dass eine Nachrichtenzentrale (100), in Ansprechen auf einen Empfang einer ersten Nachricht, die von einer ersten Netzwerkeinheit (200) übertragen wird und für eine zweite Netzwerkeinheit (300) beabsichtigt ist, eine mit der ersten Nachricht verknüpfte Transaktionsinformation erzeugt;
- verknüpftes Speichern der Transaktionsinformation mit einem mit der ersten Netzwerkeinheit (200) verknüpften Identifizierer;
- dass die Nachrichtenzentrale (100) eine temporäre Senderadresse erzeugt, die einen mit der Nachrichtenzentrale (100) verknüpften Identifizierer als ein erstes Teilstück und die Transaktionsinformation als ein zweites folgendes Teilstück umfasst; und
- dass die Nachrichtenzentrale (100) eine zweite Nachricht an die zweite Netzwerkeinheit (300) überträgt, wobei die temporäre Senderadresse als eine Senderadresse in der zweiten Nachricht zugewiesen wird, die wenigstens ein Teilstück der ersten Nachricht umfasst, wobei die temporäre Senderadresse in einem von der zweiten Netzwerkeinheit (300) lesbaren Adressformat ist und die zweite Netzwerkeinheit (300) zum Antworten an die erste Netzwerkeinheit (200) durch die Nachrichtenzentrale (100) befähigt.

2. Verfahren gemäß Anspruch 1, **dadurch gekennzeichnet, dass** der mit der ersten Netzwerkeinheit (200) verknüpfte Identifizierer eine Adresse der ersten Netzwerkeinheit (200) darstellt, die in einem von der zweiten Netzwerkeinheit (300) unlesbaren Adressformat ist.

3. Verfahren gemäß Anspruch 1 oder 2, **dadurch gekennzeichnet, dass** die Nachrichtenzentrale (100) einen Zugriff auf Adressen hat, beginnend mit dem ersten Teilstück oder beginnend mit einem Identifizierer eines das Kommunikationssystem (1) verwaltenden Operators, gefolgt durch das erste Teilstück.

4. Verfahren gemäß einem der Ansprüche 1 bis 3, **dadurch gekennzeichnet, dass** die temporäre Senderadresse die zweite Netzwerkeinheit (300) zum Übertragen einer ersten Antwortnachricht an die Nachrichtenzentrale (100) befähigt, und dass die Transaktionsinformation mit dem mit der ersten Netzwerkeinheit (200) verknüpften Identifizierer in einer mit der Nachrichtenzentrale (100) verknüpften Nachrichtendatenbank (180) verknüpft gespeichert wird, wobei das Verfahren die weiteren Schritte umfasst zum:
- Extrahieren der Transaktionsinformation aus der temporären Senderadresse, die als Empfängeradresse der empfangenen ersten Antwortnachricht zugewiesen ist; und
- Abrufen des mit der ersten Netzwerkeinheit (200) verknüpften Identifizierers von der Nachrichtendatenbank (180) basierend auf der Transaktionsinformation, wobei der abgerufene, mit der ersten Netzwerkeinheit (200) verknüpfte Identifizierer die Nachrichtenzentrale (100) zum Übertragen einer zweiten Antwortnachricht an die erste Netzwerkeinheit (200) befähigt, wobei die zweite Antwortnachricht wenigstens ein Teilstück der ersten Antwortnachricht umfasst.

5. Verfahren gemäß Anspruch 4, **gekennzeichnet durch**:
- Entfernen, in Ansprechen auf Übertragen der zweiten Antwortnachricht, der gespeicherten Transaktionsinformation aus der Nachrichtendatenbank (180).

6. Verfahren gemäß Anspruch 4 oder 5, **dadurch gekennzeichnet, dass**:
- die Nachrichtenzentrale (100) eine mit der ersten Netzwerkeinheit (200) verknüpfte Adresse von einer mit der Nachrichtenzentrale (100) verknüpften Netzwerkeinheit-Datenbank (400) basierend auf dem abgerufenen, mit der ersten Netzwerkeinheit (200) verknüpften Identifizierer erhält,
wobei die mit der ersten Netzwerkeinheit (200) verknüpfte Adresse die Nachrichtenzentrale (100) zum Übertragen der zweiten Antwortnachricht befähigt.

7. Verfahren gemäß einem der Ansprüche 1 bis 6, **dadurch gekennzeichnet, dass** der Speicherungsschrift wiederum den Schritt umfasst zum:
- Speichern der Transaktionsinformation und des mit der ersten Netzwerkeinheit (200) verknüpften Identifizierers verknüpft mit einer mit der ersten Nachricht verknüpften Nachrichtenformatinformation, wobei die Nachrichtenformatinformation der Nachrichtenzentrale (100) ein Identifizieren eines Nachrichtenformats der ersten Nachricht ermöglicht.

8. Verfahren gemäß Anspruch 4 oder 7, **dadurch gekennzeichnet, dass**:
- die Nachrichtenzentrale (100) die zweite Antwortnachricht basierend auf der erhaltenen Nachrichtenformatinformation erzeugt, wobei das Nachrichtenformat der zweiten Antwortnachricht identisch mit dem Nachrichtenformat der ersten Nachricht ist.

9. Nachrichtenzentrale (100), die ausgebildet ist zum Verwalten eines Mitteilens in einem Kommunikationssystem (1), wobei die Zentrale (100) umfasst:
- eine Einrichtung (110) zum Empfangen einer ersten Nachricht, die von einer ersten Netzwerkeinheit (200) übertragen ist und für eine zweite Netzwerkeinheit (300) beabsichtigt ist;
- eine Einrichtung (120) zum Erzeugen, in Ansprechen auf einen Empfang der ersten Nachricht, einer mit der ersten Nachricht verknüpften Transaktionsinformation;
- eine Einrichtung (160) zum Bereitstellen der Transaktionsinformation und eines mit der ersten Netzwerkeinheit (200) verknüpften Identifizierers zur verknüpften Speicherung in einer mit der Nachrichtenzentrale (100) verknüpften Nachrichtendatenbank (180);
- eine Einrichtung (140) zum Erzeugen einer temporären Senderadresse, die einen mit der Nachrichtenzentrale (100) verknüpften Identifizierer als ein erstes Teilstück und die Transaktionsinformation als ein zweites folgendes Teilstück umfasst; und
- eine Einrichtung (110) zum Übertragen einer zweiten Nachricht an die zweite Netzwerkeinheit (300), wobei die temporäre Senderadresse als eine Senderadresse in der zweiten Nachricht zugewiesen ist, wobei die temporäre Senderadresse in einem von der zweiten Netzwerkeinheit (300) lesbaren Adressformat ist, und die zweite Netzwerkeinheit (300) zum Antworten an die erste Netzwerkeinheit (200) durch die Nachrichtenzentrale (100) befähigt.

10. Nachrichtenzentrale gemäß Anspruch 9, **dadurch gekennzeichnet, dass** der mit der ersten Netzwerkeinheit (200) verknüpfte Identifizierer eine Adresse der ersten Netzwerkeinheit (200) darstellt, die in einem von der zweiten Netzwerkeinheit (300) unlesbaren Adressformat ist.

11. Nachrichtenzentrale gemäß Anspruch 9 oder 10, **dadurch gekennzeichnet, dass** die Nachrichtenzentrale (100) einen Zugriff auf Adressen hat, beginnend mit dem ersten Teilstück oder beginnend mit einem Identifizierer eines das Kommunikationssystem (1) verwaltenden Operators, gefolgt durch das erste Teilstück.

12. Nachrichtenzentrale gemäß einem der Ansprüche 9 bis 11, **dadurch gekennzeichnet, dass** die Empfangseinrichtung (110) konfiguriert ist zum Empfangen einer ersten Antwortnachricht, die mit der temporären Senderadresse verknüpft ist, die von der zweiten Netzwerkeinheit (300) übertragen ist, wobei die Nachrichtenzentrale (100) ferner umfasst:
- eine Einrichtung (130) zum Extrahieren der Transaktionsinformation aus der temporären Senderadresse, die als Empfängeradresse der empfangenen ersten Antwortnachricht zugewiesen ist;
- eine Einrichtung (160) zum Erhalten des mit der ersten Netzwerkeinheit (200) verknüpften Identifizierers von der Datenbank (180) basierend auf der Transaktionsinformation,
wobei der erhaltene, mit der ersten Netzwerkeinheit (200) verknüpfte Identifizierer die Übertragungseinrichtung (110) zum Übertragen einer zweiten Antwortnachricht an die erste Netzwerkeinheit (200) befähigt, wobei die zweite Antwortnachricht wenigstens ein Teilstück der ersten Antwortnachricht umfasst.

13. Nachrichtenzentrale gemäß Anspruch 12, **gekennzeichnet durch**:
- eine Einrichtung (160) zum Entfernen, in Ansprechen auf die die zweite Antwortnachricht übertragende Übertragungseinrichtung (110), der gespeicherten Transaktionsinformation aus der Nachrichtendatenbank (180).

14. Nachrichtenzentrale gemäß Anspruch 12 oder 13, **gekennzeichnet durch**:
- eine Einrichtung (110) zum Erhalten einer mit der ersten Netzwerkeinheit (200) verknüpften Adresse von einer mit der Nachrichtenzentrale (100) verknüpften Netzwerkeinheit-Datenbank (400) basierend auf dem erhaltenen, mit der ersten Netzwerkeinheit (200) verknüpften Identifizierer,
wobei die mit der ersten Netzwerkeinheit (200) verknüpfte Adresse die Übertragungseinrichtung (110) zum Übertragen der zweiten Antwortnachricht befähigt.

15. Nachrichtenzentrale gemäß einem der Ansprüche 9 bis 14, **dadurch gekennzeichnet, dass** die Bereitstellungseinrichtung (160) konfiguriert ist zum Bereitstellen der Transaktionsinformation, des mit der ersten Netzwerkeinheit (200) verknüpften Identifizierers und der mit der ersten Nachricht verknüpften Nachrichtenformatinformation zur verknüpften Speicherung in der Nachrichtendatenbank (180), wobei die Nachrichtenformatinformation die Nachrichtenzentrale (100) zum Identifizieren eines Nachrichtenformats der ersten Nachricht befähigt.

16. Nachrichtenzentrale gemäß Anspruch 12 oder 15, **gekennzeichnet durch**:
- eine Einrichtung (170) zum Erzeugen der zweiten Antwortnachricht basierend auf der erhaltenen Nachrichtenformatinformation, wobei das Nachrichtenformat der zweiten Antwortnachricht identisch mit dem Nachrichtenformat der ersten Nachricht ist.

17. Kommunikationssystem (1), das ausgebildet ist zum Verwalten eines Mitteilens, wobei das System (1) wenigstens eine Nachrichtenzentrale (100) gemäß einem der Ansprüche 9 bis 14 umfasst.

## Revendications

1. Procédé de gestion des messages dans un système de communication (1), ledit procédé comprenant les étapes consistant à :
- faire produire par un centre de messagerie (100), en réponse à la réception d'un premier message émis à partir d'une première unité de réseau (200) et destiné à une seconde unité de réseau (300), des informations de transaction associées audit premier message ;
- stocker lesdites informations de transaction de manière associative avec un identificateur associé à ladite première unité de réseau (200) ;
- faire produire par ledit centre de messagerie (100) une adresse temporaire d'expéditeur qui comprend un identificateur associé audit centre de messagerie (100) constituant une première partie et lesdites informations de transaction constituant une seconde partie qui suit ; et
- faire émettre par ledit centre de messagerie (100) un second message à ladite seconde unité de réseau (300), ladite adresse temporaire d'expéditeur étant attribuée comme adresse d'expéditeur dans ledit second message, qui comprend au moins une partie dudit premier message, dans lequel ladite adresse temporaire d'expéditeur est dans un format d'adresse qui est lisible par ladite seconde unité de réseau (300) et permet à ladite seconde unité de réseau (300) de répondre à ladite première unité de réseau (200) via ledit centre de messagerie (100).

2. Procédé selon la revendication 1, **caractérisé en ce que** ledit identificateur associé à ladite première unité de réseau (200) représente une adresse de ladite première unité de réseau (200) qui est dans un format d'adresse illisible par ladite seconde unité de réseau (300).

3. Procédé selon la revendication 1 ou 2, **caractérisé en ce que** ledit centre de messagerie (100) a accès à des adresses commençant par ladite première partie ou commençant par un identificateur d'un opérateur gérant ledit système de communication (1), suivi de ladite première partie.

4. Procédé selon l'une quelconque des revendications 1 à 3, **caractérisé en ce que** ladite adresse temporaire d'expéditeur permet à ladite seconde unité de réseau (300) d'émettre un premier message de réponse vers ledit centre de messagerie (100) et lesdites informations de transaction sont stockées de manière associative avec ledit identificateur associé à ladite première unité de réseau (200) dans une base de données de messagerie (180) associée audit centre de messagerie (100), ledit procédé comprenant en outre les étapes consistant à :
- extraire lesdites informations de transaction de ladite adresse temporaire d'expéditeur, attribuée audit premier message de réponse reçu comme adresse de destinataire ; et
- extraire de ladite base de données de messagerie (180) ledit identificateur associé à ladite première unité de réseau (200), sur la base desdites informations de transaction, ledit identificateur obtenu associé à ladite première unité de réseau (200) permettant audit centre de messagerie (100) d'émettre un second message de réponse vers ladite première unité de réseau (200), ledit second message de réponse comprenant au moins une partie dudit premier message de réponse.

5. Procédé selon la revendication 4, **caractérisé par** la suppression, dans ladite base de données de messagerie (180), en réponse à l'émission dudit second message de réponse, desdites informations de transaction stockées.

6. Procédé selon la revendication 4 ou 5, **caractérisé en ce que** ledit centre de messagerie (100) obtient d'une base de données des unités de réseau (400) associée audit centre de messagerie (100) une adresse associée à ladite première unité de réseau (200), sur la base dudit identificateur obtenu qui est associé à ladite première unité de réseau (200),
dans lequel ladite adresse associée à ladite première unité de réseau (200) permet audit centre de messagerie (100) d'émettre ledit second message de réponse.

7. Procédé selon l'une quelconque des revendications 1 à 6, **caractérisé en ce que** ladite étape de stockage comprend à son tour l'étape consistant à stocker de manière associative lesdites informations de transaction et ledit identificateur associé à ladite première unité de réseau (200) avec des informations de format de message associées audit premier message, lesdites informations de format de message permettant audit centre de messagerie (100) d'identifier un format de message dudit premier message.

8. Procédé selon les revendications 4 et 7, **caractérisé en ce que** ledit centre de messagerie (100) produit ledit second message de réponse sur la base desdites informations de format de message obtenues, le format de message dudit second message de réponse étant identique audit format de message dudit premier message.

9. Centre de messagerie (100) conçu pour gérer la messagerie dans un système de communication (1), ledit centre (100) comprenant :
- un moyen (110), destiné à recevoir un premier message émis par une première unité de réseau (200) et destiné à une seconde unité de réseau (300) ;
- un moyen (120), destiné à produire, en réponse à la réception dudit premier message, des informations de transaction associées audit premier message ;
- un moyen (160), destiné à fournir lesdites informations de transaction et un identificateur associé à ladite première unité de réseau (200) pour qu'ils soient stockés de manière associative dans une base de données de messagerie (180) associée audit centre de messagerie (100) ;
- un moyen (140), destiné à produire une adresse temporaire d'expéditeur qui comprend un identificateur associé audit centre de messagerie (100) constituant une première partie et lesdites informations de transaction constituant une seconde partie qui suit ; et
- un moyen (110), destiné à émettre un second message vers ladite seconde unité de réseau (300), ladite adresse temporaire d'expéditeur étant attribuée comme adresse d'expéditeur dans ledit second message, dans lequel ladite adresse temporaire d'expéditeur est dans un format d'adresse qui est lisible par ladite seconde unité de réseau (300) et permet à ladite seconde unité de réseau (300) de répondre à ladite première unité de réseau (200) via ledit centre de messagerie (100).

10. Centre de messagerie selon la revendication 9, **caractérisé en ce que** ledit identificateur associé à ladite première unité de réseau (200) représente une adresse de ladite première unité de réseau (200) qui est dans un format d'adresse illisible par ladite seconde unité de réseau (300).

11. Centre de messagerie selon la revendication 9 ou 10, **caractérisé en ce que** ledit centre de messagerie (100) a accès à des adresses commençant par ladite première partie ou commençant par un identificateur d'un opérateur gérant ledit système de communication (1), suivi de ladite première partie.

12. Centre de messagerie selon l'une quelconque des revendications 9 à 11, **caractérisé en ce que** ledit moyen de réception (110) est configuré pour recevoir un premier message de réponse, associé à ladite adresse temporaire d'expéditeur, émis par ladite seconde unité de réseau (300), ledit centre de messagerie (100) comprenant en outre :
- un moyen (130), destiné à extraire lesdites informations de transaction de ladite adresse temporaire d'expéditeur, attribuée audit premier message de réponse reçu comme adresse de destinataire ;
- un moyen (160), destiné à extraire de ladite base de données de messagerie (180) ledit identificateur ainsi obtenu associé à ladite première unité de réseau (200), sur la base desdites informations de transaction,
ledit identificateur ainsi obtenu associé à ladite première unité de réseau (200), ainsi obtenu, permettant audit moyen d'émission (110) d'émettre un second message de réponse vers ladite première unité de réseau (200), ledit second message de réponse comprenant au moins une partie dudit premier message de réponse.

13. Centre de messagerie selon la revendication 12, **caractérisé par** un moyen (160), destiné à supprimer, dans ladite base de données de messagerie (180), en réponse à l'émission dudit second message de réponse par ledit moyen d'émission, lesdites informations de transaction stockées.

14. Centre de messagerie selon la revendication 12 ou 13, **caractérisé par** un moyen (110), destiné à obtenir d'une base de données des unités de réseau (400) associée audit centre de messagerie (100) une adresse associée à ladite première unité de réseau (200), sur la base dudit identificateur obtenu qui est associé à ladite première unité de réseau (200),
dans lequel ladite adresse associée à ladite première unité de réseau (200) permet audit moyen d'émission (110) d'émettre ledit second message de réponse.

15. Centre de messagerie selon l'une quelconque des revendications 9 à 14, **caractérisé en ce que** ledit moyen de fourniture (160) est configuré pour fournir lesdites informations de transaction, ledit identificateur associé à ladite première unité de réseau (200) et des informations de format de message associées audit premier message, afin de les stocker de manière associative dans ladite base de données de messagerie (180), lesdites informations de format de message permettant audit centre de messagerie (100) d'identifier un format de message dudit premier message.

16. Centre de messagerie selon les revendications 12 et 15, **caractérisé par** un moyen (170), destiné à produire ledit second message de réponse sur la base desdites informations de format de message obtenues, le format de message dudit second message de réponse étant identique audit format de message dudit premier message.

17. Système de communication (1) conçu pour gérer la messagerie, ledit système (1) comprenant au moins un centre de messagerie (100) selon l'une quelconque des revendications 9 à 14.
